# EUROPEAN PATENT SPECIFICATION

(11) **EP 4 113 734 B1**
(45) Date of publication and mention of the grant of the patent: **08.10.2025**
(21) Application number: 21842136.0
(22) Date of filing: 22.06.2021
(51) Int. Cl.: H01M 50/30, H01M 50/105, H01M 50/569, H01M 50/183, H01M 10/48

(54) **POUCH-SHAPED SECONDARY BATTERY WITH IMPROVED SAFETY AND BATTERY MODULE INCLUDING THE SAME**
BEUTELFÖRMIGE SEKUNDÄRBATTERIE MIT VERBESSERTER SICHERHEIT UND BATTERIEMODUL DAMIT
BATTERIE SECONDAIRE EN FORME DE POCHE À SÉCURITÉ AMÉLIORÉE ET MODULE DE BATTERIE LA COMPRENANT

(30) Priority: 15.07.2020 KR 20200087180
(43) Date of publication of application: 04.01.2023
(73) Proprietor: LG Energy Solution, Ltd., Seoul 07335 (KR)
(72) Inventor: LEE, Bum Hee, Daejeon 34122 (KR); LEE, Sang Ki, Daejeon 34122 (KR); KANG, Su Won, Daejeon 34122 (KR)
(74) Representative: Plasseraud IP
(86) International application number: PCT/KR2021/007778
(87) International publication number: WO 2022/014888

(56) References cited:
- JP-A- 2018 525 804
- JP-A- 2019 200 923
- KR-A- 20110 093 358
- KR-A- 20170 040 919
- KR-A- 20170 043 926
- KR-A- 20170 050 926
- KR-A- 20180 076 578
- US-A1- 2014 199 581
- US-A1- 2018 183 027

## Description

### [Technical Field]

This application claims the benefit of priority to Korean Patent Application No. 2020-0087180 filed on July 15, 2020.

The present invention relates to a pouch-shaped secondary battery with improved safety and a battery module including the same. More particularly, the present invention relates to a pouch-shaped secondary battery including a danger sensing device including a gas pocket disposed on an electrode lead and a current sensing portion configured to move in response to an expansion of the gas pocket and a battery module including the same.

### [Background Art]

With recent diversification of devices that use batteries, demand for high-capacity and high-density batteries has increased. In particular, concern about a pouch-shaped secondary battery configured such that the thickness of an aluminum laminate sheet is reduced to obtain a high-capacity and high-density battery has increased.

The pouch-shaped secondary battery is generally formed by shaping an aluminum laminate sheet to form a receiving portion and receiving an electrode assembly including a positive electrode, a separator, and a negative electrode in the receiving portion. The aluminum laminate sheet is easily deformed and thus manufactured in various forms, whereby it is possible to form pouch-shaped secondary batteries suitable for various electronic devices. In addition, since the aluminum laminate sheet is light, unlike a conventional cylindrical secondary battery or prismatic secondary battery, it is possible to increase energy density per weight of the pouch-shaped secondary battery.

When gas is generated in the pouch-shaped secondary battery during charging and discharging thereof, however, the battery may generate heat or may explode due to malfunction of the battery. In the case in which a battery case is broken, noxious gases or chemicals may be discharged therefrom. In particular, it is not possible to discharge gas generated when internal short circuit occurs, whereby there is a danger of explosion.

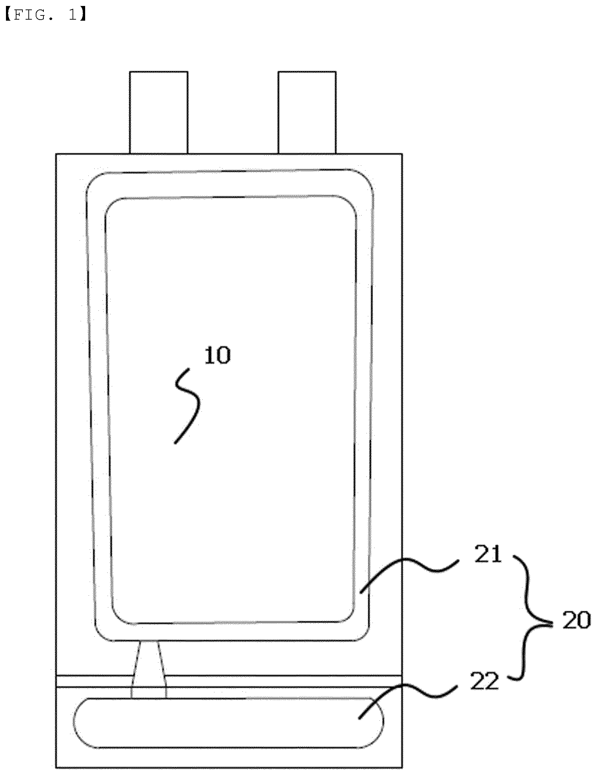

FIG. 1 is a perspective view of a pouch-shaped secondary battery having a gas pocket.

As shown in FIG. 1, the pouch-shaped secondary battery having the gas pocket may include an electrode assembly 10 and a case 20 having a receiving portion 21 configured to receive the electrode assembly 10 and a gas pocket 22 configured to receive gas generated in the receiving portion 21. The pouch-shaped secondary battery having the gas pocket 22 is provided with a separate space capable of receiving gas, whereby it is possible to prevent damage to the pouch-shaped secondary battery due to the gas, compared to a pouch-shaped secondary battery having no gas pocket 22. However, the gas pocket 22 increases overall volume of the pouch-shaped secondary battery, and it is not possible to indicate interruption in function of the pouch-shaped secondary battery or damage to the pouch-shaped secondary battery in advance.

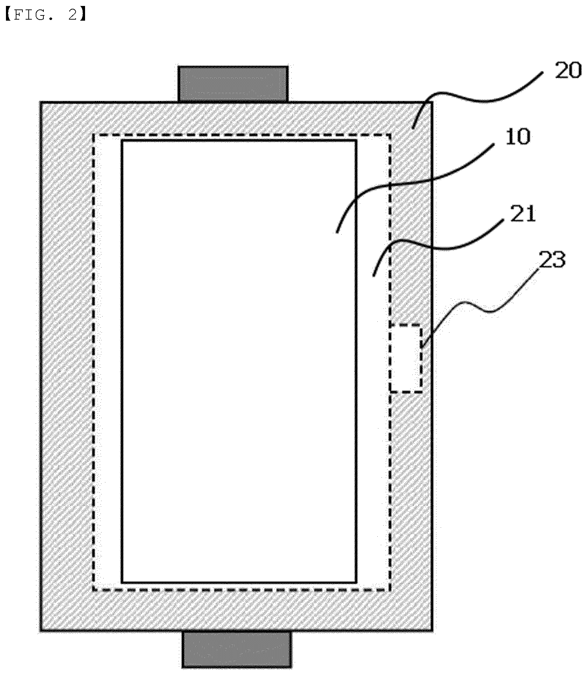

FIG. 2 is a perspective view of a pouch-shaped secondary battery having a gas discharge induction portion.

The pouch-shaped secondary battery having the gas discharge induction portion includes an electrode assembly 10 and a case 20 having a receiving portion 21 configured to receive the electrode assembly 10, similarly to the pouch-shaped secondary battery of FIG. 1. The gas discharge induction portion 23, which induces discharge of gas, is located at the surface of the case 20 adjacent to the receiving portion. The gas discharge induction portion 23 is connected to the receiving portion 21. A part of a sealed portion that seals the periphery of the receiving portion 21 is sealed with low sealing force, or a part of the sealed portion may not be sealed, as shown in FIG. 2.

In addition, a method of providing a safety device, such as a fuse or a protection circuit, outside a pouch or disposing a removal material in the pouch is considered in order to improve safety of the pouch-shaped secondary battery. However, there is no device that measures whether noxious gases have been generated in the battery before an accident occurs in order to assist in predicting the point in time at which a danger occurs, and therefore it is not possible to prevent occurrence of a problem or an accident due to malfunction of the pouch-shaped secondary battery.

Patent Document 1 discloses a battery module including a probe configured to sense swelling of a battery cell, wherein the sensing probe senses a change in local volumetric expansion of the battery cell and transmits a signal. However, there is a problem in that a measurement error may occur depending on a region of the battery cell that is expanded.

Therefore, there is a need to improve safety of a pouch-shaped secondary battery.

### (Prior Art Document)

(Patent Document 1) Korean Patent Application Publication No. 10-2017-0040919
(Patent Document 2) US 2018/183027 A1
(Patent Document 3) KR 2011 0093358 A
(Patent Document 4) KR 2018 0076578 A
(Patent Document 5) US 2014/199581 A1

### [Disclosure]

### [Technical Problem]

The present invention has been made in view of the above problems, and it is an object of the present invention to measure the amount of gas in a receiving portion before a pouch-shaped secondary battery is broken.

It is another object of the present invention to indicate that a pouch-shaped secondary battery will break immediately before breakage of the pouch-shaped secondary battery in order to improve safety of the pouch-shaped secondary battery or a battery module and a battery pack including the same and to stably supply energy to a device that uses the battery.

### [Technical Solution]

In order to accomplish the above objects, a pouch-shaped secondary battery in accordance with the independent claim 1 is provided and includes an electrode assembly having an electrode lead protruding therefrom, a case including a receiving portion configured to receive the electrode assembly, and a danger sensing device including a gas pocket disposed on the electrode lead and a current sensing portion configured to move in response to an expansion of the gas pocket.

The current sensing portion includes an electrode lead contact portion in contact with the electrode lead and a gas pocket contact portion abutting the gas pocket, the gas pocket contact portion being configured to move the current sensing portion using an expansion force of the gas pocket.

The distance between the electrode lead contact portion and the electrode lead may increase due to the expansion of the gas pocket.

The gas pocket contact portion may contact the gas pocket along the direction in which the gas pocket expands.

The gas pocket contact portion may have a larger sectional width than the electrode lead contact portion.

At least the electrode lead contact portion of the current sensing portion may be a conductor.

At least the outer surface of the gas pocket contact portion of the current sensing portion may be made of an insulation material.

The insulation material may be a material that has adhesive force.

A side of the current sensing portion may be connected to a voltage measurement device.

The portion at which the gas pocket and the receiving portion are connected to each other may be sealed with lower sealing force than the sealed portion.

When pressure in the receiving portion is equal to or higher than a predetermined range, the gas pocket may expand.

One surface of the gas pocket may contact the electrode lead, and the other surface of the gas pocket may contact the current sensing portion.

The gas pocket may be provided at each of opposite sides of the current sensing portion.

The gas pocket may be provided above a terraced portion formed by a sealed portion where the electrode lead protrudes or may be disposed at least on the electrode lead.

The present invention provides a battery module including the pouch-shaped secondary battery.

The pouch-shaped secondary battery may be connected in parallel.

The present invention provides a battery pack including the pouch-shaped secondary battery. In addition, the present invention provides a device in which the pouch-shaped secondary battery is mounted.

In the present invention, one or more constructions that do not conflict with each other may be selected and combined from among the above constructions.

### [Advantageous Effects]

As is apparent from the above description, a pouch-shaped secondary battery according to the present invention is configured such that it is possible to determine whether gas is generated in a receiving portion and to prevent interruption in function of the pouch-shaped secondary battery or breakage of the pouch-shaped secondary battery due to the generated gas, whereby it is possible to improve safety of the battery.

Furthermore, the extent of gas generated in the receiving portion is directly converted into an electrical signal, which is transmitted, whereby it is possible to rapidly determine whether the pouch-shaped secondary battery is abnormal.

In addition, for a battery module including one or more pouch-shaped secondary batteries according to the present invention, it is possible to recognize malfunction of some of the pouch-shaped secondary batteries in advance.

### [Description of Drawings]

FIG. 1 is a perspective view of a pouch-shaped secondary battery having a gas pocket.
FIG. 2 is a perspective view of a pouch-shaped secondary battery having a gas discharge induction portion.
FIG. 3 is a perspective view of a pouch-shaped secondary battery according to a first embodiment of the present invention.
FIG. 4 is a plan view of the pouch-shaped secondary battery according to the first embodiment of the present invention.
FIG. 5 is a side sectional view of the pouch-shaped secondary battery according to the first embodiment of the present invention.
FIG. 6 is a perspective view of a pouch-shaped secondary battery according to a second embodiment of the present invention.
FIG. 7 is a plan view of the pouch-shaped secondary battery according to the second embodiment of the present invention.
FIG. 8 is a plan view of a pouch-shaped secondary battery according to a third embodiment of the present invention.
FIG. 9 is a side sectional view of the pouch-shaped secondary battery according to the present invention.
FIG. 10 is a schematic view showing a method to manufacture a pouch-shaped secondary battery according to the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

In addition, all numeric ranges include the lowest value, the highest value, and all intermediate values therebetween unless the context clearly indicates otherwise.

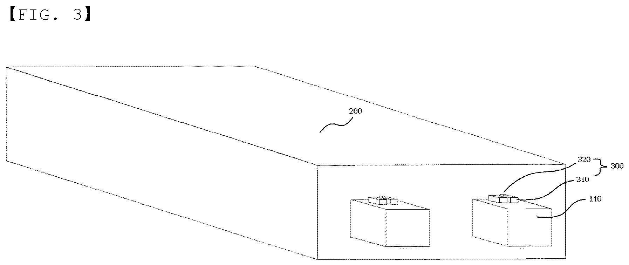

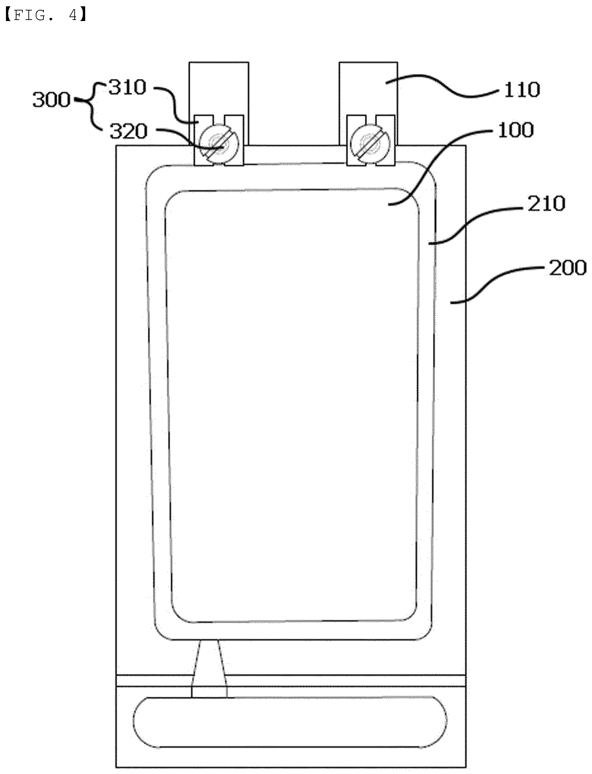

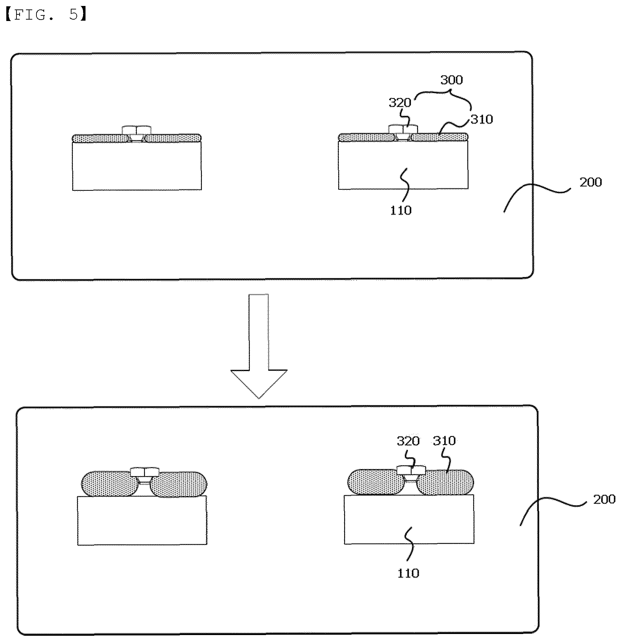

FIG. 3 is a perspective view of a pouch-shaped secondary battery according to a first embodiment of the present invention, FIG. 4 is a plan view of the pouch-shaped secondary battery according to the first embodiment of the present invention, and FIG. 5 is a side sectional view of the pouch-shaped secondary battery according to the first embodiment of the present invention.

As shown in FIGS. 3 to 5, the pouch-shaped secondary battery according to the first embodiment of the present invention includes an electrode assembly 100 having electrode leads 110 protruding therefrom, a case 200 including a receiving portion 210 configured to receive the electrode assembly 100, and a danger sensing device 300 including a gas pocket 310 disposed on each of the electrode leads 110 and a current sensing portion 320 configured to move in response to expansion of the gas pocket 310.

The electrode assembly 100 may be a jelly-roll type assembly, which is configured to have a structure in which a long sheet type positive electrode and a long sheet type negative electrode are wound in the state in which a separator is interposed therebetween, a stacked type electrode assembly including unit cells, each of which is configured to have a structure in which a rectangular positive electrode and a rectangular negative electrode are stacked in the state in which a separator is interposed therebetween, a stacked and folded type assembly, which is configured to have a structure in which unit cells are wound using a long separation film, or a laminated and stacked type assembly, which is configured to have a structure in which unit cells are stacked in the state in which a separator is interposed therebetween and are then attached to each other. However, the present invention is not limited thereto.

The electrode leads 110 may be configured to have a structure in which the electrode leads are exposed out of the case after positive electrode tabs and negative electrode tabs of the electrode assembly 100 are electrically connected to the electrode leads or a structure in which the electrode leads 110 directly connect the electrode assembly 100 to the outside of the case 200 without positive electrode tabs and negative electrode tabs. However, the present invention is not limited thereto. The secondary battery described above is generally known, and therefore a more detailed description thereof will be omitted.

The case 200 is generally configured to have a laminate sheet structure including an inner layer, a metal layer, and an outer layer. The inner layer is disposed in direct contact with the electrode assembly, and therefore the inner layer must exhibit high insulation properties and high resistance to an electrolytic solution. In addition, the inner layer must exhibit high sealability in order to hermetically seal the case from the outside, i.e., a thermally-bonded sealed portion between inner layers must exhibit excellent thermal bonding strength. The inner layer may be made of a material selected from among a polyolefin-based resin, such as polypropylene, polyethylene, polyethylene acrylate, or polybutylene, a polyurethane resin, and a polyimide resin, which exhibit excellent chemical resistance and high sealability. However, the present invention is not limited thereto, and polypropylene, which exhibits excellent mechanical-physical properties, such as tensile strength, rigidity, surface hardness, and impact resistance strength, and excellent chemical resistance, is the most preferably used.

The metal layer, which is disposed so as to abut the inner layer, corresponds to a barrier layer configured to prevent moisture or various kinds of gas from permeating into the battery from the outside. An aluminum thin film, which is light and easily shapeable, may be used as a preferred material for the metal layer.

The outer layer is provided on the other surface of the metal layer. The outer layer may be made of a heat-resistant polymer that exhibits excellent tensile strength, resistance to moisture permeation, and resistance to air permeation such that the outer layer exhibits high heat resistance and chemical resistance while protecting the electrode assembly. As an example, the outer layer may be made of nylon or polyethylene terephthalate. However, the present invention is not limited thereto.

The receiving portion 210 may be formed in each of the upper part and the lower part of the case 200, or may be formed in any one of the upper part and the lower part of the case.

In addition, the outside surface of the receiving portion 210 is hermetically sealed in order to prevent a material in the receiving portion 210 from being discharged from the case 200. At this time, a sealed portion 220 formed as the result of hermetically sealing is bent in a direction toward the receiving portion 210 in order to increase energy density of a battery module. At this time, a terraced portion, which is a part of the sealed portion 220 and from which the electrode lead 110 protrudes in one direction or in opposite directions, is formed so as to protrude from the receiving portion 210.

The danger sensing device 300 may be located at the terraced portion of the sealed portion 220 or at the electrode lead 110 adjacent to the terraced portion. That is, the danger sensing device 300 may extend from the terraced portion and may be located on the electrode lead, may be located at a part of the terraced portion, or may be located on the electrode lead.

The gas pocket 310 of the danger sensing device 300 may be connected to the receiving portion 210 and the sealed portion 220. That is, the gas pocket 310 may be connected to the receiving portion 210 with lower sealing force than the sealed portion 220.

In the case in which pressure in the receiving portion 210 is equal to or higher than a predetermined range, the portion of the gas pocket that is connected to the receiving portion 210 with low sealing force may be damaged, whereby gas may move into the gas pocket 310, and therefore the gas pocket may be expanded. At this time, the gas pocket 310 may be expanded at once, or may be divided into several sections and thus may be expanded twice or more.

The gas pocket 310 may be disposed at the portion of the sealed portion 220 from which the electrode lead 110 protrudes, i.e., above the terraced portion or at least on the electrode lead 110.

The gas pocket 310 according to the first embodiment of the present invention may be a part of the sealed portion 220. As shown in FIGS. 3 and 5, the gas pocket 310 may be a part of the sealed portion 220 formed at the portion at which the electrode lead 110 protruding from the electrode assembly 100 extends through the case 200.

When the sealed portion 220 is divided into three equal parts, the gas pocket 310 according to the first embodiment may be located at the outer 1/3 point of the sealed portion 220, i.e., the farthest side of the receiving portion 210.

In addition, the gas pocket 310, which is connected to the case 200, may be made of the same material as the case 200. In order to secure sealing force, one surface of the gas pocket 310 may be laminated like the electrode tabs, and the other surface of the gas pocket may be in contact with the current sensing portion 320.

At least one gas pocket 310 may be provided in a single pouch-shaped secondary battery. As an example, the gas pocket 310 may assist in movement of the current sensing portion 320 at each of opposite sides of the current sensing portion 320 such that the current sensing portion 320 is easily operated.

In addition, the pouch-shaped secondary battery according to the present invention may include a gas receiving portion configured to receive a predetermined amount of gas in addition to the gas pocket 310. Consequently, it is possible to prevent breakage of the pouch-shaped secondary battery, and when pressure in the gas receiving portion exceeds a predetermined range, it is possible to indicate a danger through the gas pocket 310. On the contrary, after the gas pocket 310 is operated by a one-way valve of the gas receiving portion, the gas receiving portion may receive gas generated in the pouch-shaped secondary battery.

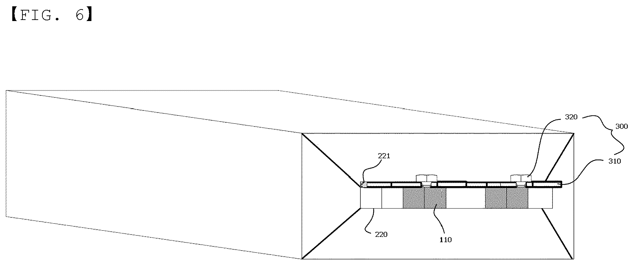

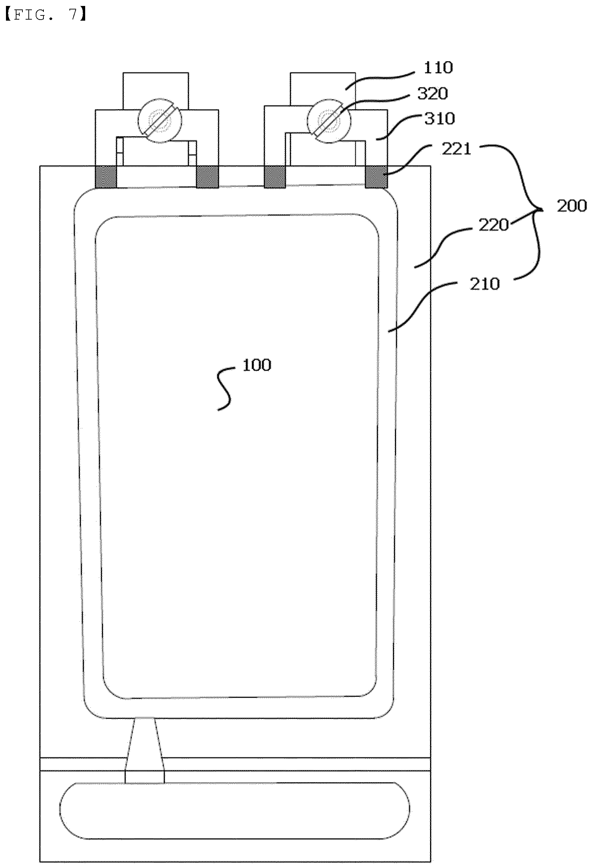

FIG. 6 is a perspective view of a pouch-shaped secondary battery according to a second embodiment of the present invention, and FIG. 7 is a plan view of the pouch-shaped secondary battery according to the second embodiment of the present invention.

As shown in FIGS. 6 and 7, in the pouch-shaped secondary battery according to the second embodiment of the present invention, the gas pocket 310 may be formed independent of the sealed portion 220. The gas pocket 310 is located adjacent to the sealed portion 220, which hermetically seals the electrode lead 110, i.e., at the distance at which the gas pocket 310 abuts the electrode lead 110 while securing force of sealing the electrode lead 110. The connection sealed portion 221 connected to the gas pocket 310 has lower sealing force than other portions. When gas is generated in the receiving portion 210, therefore, the connection sealed portion 221 is broken first, and then the gas moves into the gas pocket 310.

As shown in FIGS. 6 and 7, the gas pocket 310 may be partially curved so as to be located on the electrode lead 110.

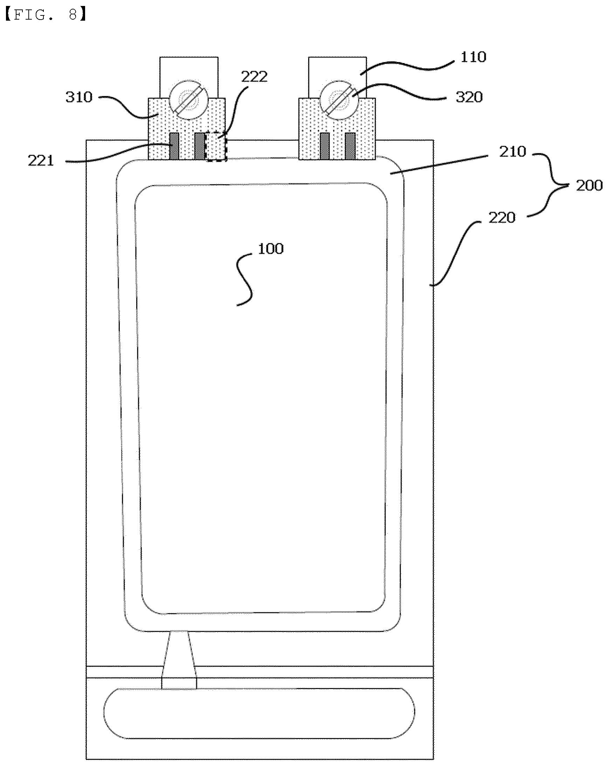

FIG. 8 is a plan view of a pouch-shaped secondary battery according to a third embodiment of the present invention.

As shown in FIG. 8, the pouch-shaped secondary battery according to the third embodiment of the present invention may be configured to have a structure in which the gas pocket 310 is integrally formed with the sealed portion 220, similarly to the pouch-shaped secondary battery according to the first embodiment.

In order to prevent flow or movement of gas from being disturbed in the case in which the gas pocket 310 is bent as in the second embodiment, the gas pocket 310 according to the third embodiment of the present invention may be formed so as to simply cover the electrode lead 110.

The surplus portion of the gas pocket 310 that covers the leads may be formed in the shape of a pouch, which is a space that is capable of being filled with unsealed gas, and the portion of the gas pocket 310 that abuts the sealed portion 220 may be divided into two parts having different sealing forces. The portion of the gas pocket that abuts the sealed portion 220 may include a connection sealed portion 221 having lower sealing force than the sealed portion 220 and a peripheral sealed portion 222 having the same sealing force as the sealed portion 220.

The connection sealed portion 221 may be located at a region other than a contour portion of the electrode lead 110 that affects force of sealing between the electrode lead 110 and the case 200. At this time, in order to maintain the force of sealing between the electrode lead 110 and the case 200 while smoothly supplying gas to the gas pocket 310, the connection sealed portion 221 may be formed in a state of being divided into at least two parts based on the electrode lead 110.

A one-way valve configured to allow gas in the receiving portion 210 to move only in one direction may be provided at the outermost contour portion of the connection sealed portion 221, i.e., at the point farthest from the sealed portion.

In the case in which a gas passage is integrally formed with the connection sealed portion 221, the peripheral sealed portion 222, which is the sealed portion 220 that is not the gas passage, and the sealed portion around the gas passage in the gas pocket 310 may be more strongly sealed than other sealed portions. In the case in which the peripheral sealed portion 222 has higher sealing force than other sealed portions, it is possible to solve a problem in that sealing force around the electrode lead 110 is reduced.

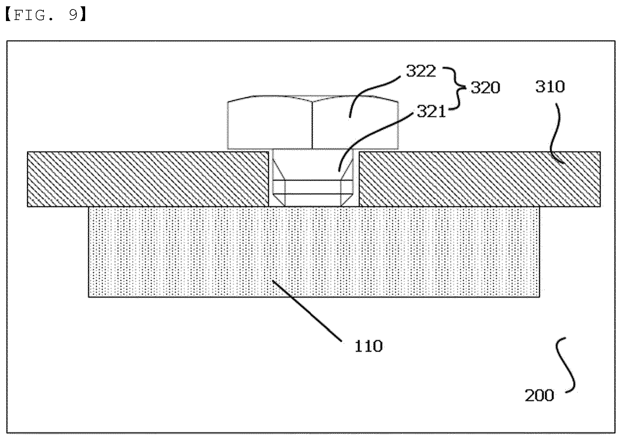

FIG. 9 is a side sectional view of the pouch-shaped secondary battery according to the present invention.

As shown in FIG. 9, the current sensing portion 320 according to the present invention may include an electrode lead contact portion 321 disposed in contact with the electrode lead 110 and a gas pocket contact portion 322 disposed abutting the gas pocket 310, the gas pocket contact portion being configured to move the current sensing portion 320 using expansion force of the gas pocket 310.

The electrode lead contact portion 321 may become far away from the electrode lead due to expansion of the gas pocket. To this end, the gas pocket contact portion 322 comes into contact with the gas pocket 310 in the direction in which the gas pocket 310 is expanded. In addition, to this end, the gas pocket contact portion 322 may have a larger sectional width than the electrode lead contact portion 321. That is, the current sensing portion 320 may be configured to have a structure in which the electrode lead contact portion 321 is disposed between the gas pockets 310 and in which the gas pocket contact portion 322 is disposed in contact with the gas pocket 310 disposed beside the electrode lead contact portion 321. The current sensing portion 320 may have a T-shaped form, a conical form, or a section climbing form so as to be operated as described above.

The current sensing portion 320 may sense current that moves in the electrode lead 110 through the electrode lead contact portion 321. When the electrode lead contact portion 321 is separated from the electrode lead 110 due to expansion of the gas pocket 310, the electrode lead contact portion 321 cannot sense current any more, and therefore it is possible to determine whether gas has been generated in the receiving portion 21.

In addition, one side of the current sensing portion 320 may be connected to a voltage measurement device, which may convert the current sensed by the electrode lead contact portion 321 into a numerical value or a signal.

It is preferable for the current sensing portion 320 to be a conductor in order to measure current through contact with the electrode lead 110, as described above. That is, it is preferable for at least the electrode lead contact portion 321 of the current sensing portion 320 to be a conductor. Although the entirety of the current sensing portion 320 is a conductor, the outer surface of the current sensing portion 320, i.e., at least the outer surface of the gas pocket contact portion 322, may be wrapped with an insulation material such that no current flows in another portion of the pouch-shaped secondary battery, e.g. the gas pocket 310.

The insulation material may be a material that has adhesive force in order to fix the current sensing portion 320. As an example, the insulation material may be at least one selected from the group consisting of polyethylene, polypropylene, polyvinyl fluoride, polyvinyl alcohol, polyvinyl polyamide imide, an epoxy-based material, an acrylic-based material, a silicone-based material, a urethane-based material, a thermoplastic urethane-based material, and a thermoplastic ether ester-based material.

In addition, the current sensing portion 320 according to the present invention may be provided in one or more in order to measure the amount of gas depending on the extent to which the gas pocket 310 having several sealed portions is opened.

The present invention may provide a battery module including at least one pouch-shaped secondary battery. The battery module may be configured such that pouch-shaped secondary batteries are connected to each other in parallel. The reason for this is that, in the case in which the pouch-shaped secondary batteries are connected to each other in series, it is possible to easily recognize one unit cell, when the unit cell is abnormal, whereas, in the case unit cells are connected to each other in parallel, it is difficult to find abnormality of one of the unit cells.

In addition, the present invention may provide a battery pack including the pouch-shaped secondary battery.

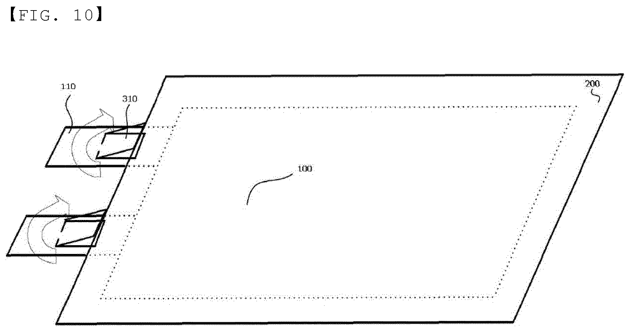

FIG. 10 is a schematic view showing a pouch-shaped secondary battery manufacturing method according to the present invention.

In the pouch-shaped secondary battery according to the present invention, the portion of the case that will become the gas pocket 310 and the electrode lead 110 may be bonded to each other first, and then the remaining portions may be bonded. After bonding, the portion that will become the gas pocket 310 may be folded such that no empty space is formed, as shown in FIG. 10, and then the portion that contacts the remaining portion of the electrode lead 110 may be further welded.

In addition, the present invention provides a battery pack including the pouch-shaped secondary battery and a device including the battery pack. The battery pack and the device are well known in the art to which the present invention pertains, and thus a detailed description thereof will be omitted.

For example, the device may be a laptop computer, a netbook computer, a tablet PC, a mobile phone, an MP3 player, a wearable electronic device, a power tool, an electric vehicle (EV), a hybrid electric vehicle (HEV), a plug-in hybrid electric vehicle (PHEV), an electric bicycle (E-bike), an electric scooter (E-scooter), an electric golf cart, or an energy storage system. However, the present invention is not limited thereto.

### (Description of Reference Numerals)

10, 100: Electrode assemblies
11, 110: Electrode leads
20, 200: Cases
21, 210: Receiving portions
22, 220: Sealed portions
221: Connection sealed portion
222: Peripheral sealed portion
23: Gas discharge induction portion
300: Danger sensing device
310: Gas pocket
320: Current sensing portion
321: Electrode lead contact portion
322: Gas pocket contact portion

## Claims

1. A pouch-shaped secondary battery comprising:
an electrode assembly (100) having an electrode lead (110) protruding therefrom; and
a case (200) comprising a receiving portion (210) configured to receive the electrode assembly (100), wherein the electrode leads (110) are exposed out of the case (200);
**characterized in that** the pouch-shaped secondary battery further comprises:
a danger sensing device (300) comprising a gas pocket (310) disposed on the electrode lead (110) and a current sensing portion (320) configured to move in response to an expansion of the gas pocket (310),
wherein the current sensing portion (320) comprises:
an electrode lead contact portion (321) in contact with the electrode lead (110); and
a gas pocket contact portion (322) abutting the gas pocket (310), the gas pocket contact portion (322) being configured to move the current sensing portion (320) using an expansion force of the gas pocket (310).

2. The pouch-shaped secondary battery according to claim 1, wherein a distance between the electrode lead contact portion (321) and the electrode lead (110) increases due to the expansion of the gas pocket (310).

3. The pouch-shaped secondary battery according to claim 1, wherein the gas pocket contact portion (322) contacts the gas pocket (310) along a direction in which the gas pocket (310) expands.

4. The pouch-shaped secondary battery according to claim 3, wherein the gas pocket contact portion (322) has a larger sectional width than the electrode lead contact portion (321).

5. The pouch-shaped secondary battery according to claim 1, wherein at least the electrode lead contact portion (321) of the current sensing portion (320) is a conductor.

6. The pouch-shaped secondary battery according to claim 5, wherein at least an outer surface of the gas pocket contact portion (322) of the current sensing portion is made of an insulation material.

7. The pouch-shaped secondary battery according to claim 6, wherein the insulation material is a material that has adhesive force.

8. The pouch-shaped secondary battery according to claim 1, wherein a side of the current sensing portion (320) is connected to a voltage measurement device.

9. The pouch-shaped secondary battery according to claim 1, wherein a portion at which the gas pocket (310) and the receiving portion (210) are connected to each other is sealed with lower sealing force than the sealed portion (220).

10. The pouch-shaped secondary battery according to claim 9, wherein the gas pocket (310) expands when pressure in the receiving portion (210) is equal to or higher than a predetermined range.

11. The pouch-shaped secondary battery according to claim 1, wherein one surface of the gas pocket (310) contacts the electrode lead (110), and
wherein the other surface of the gas pocket (310) contacts the current sensing portion (320).

12. The pouch-shaped secondary battery according to claim 1, wherein the gas pocket (310) is provided at each of opposite sides of the current sensing portion (320).

13. The pouch-shaped secondary battery according to claim 1, wherein the gas pocket (310) is provided above a terraced portion formed by a sealed portion (220) where the electrode lead protrudes (110) or is disposed at least on the electrode lead (110).

14. A battery module comprising the pouch-shaped secondary battery according to any one of claims 1 to 13.

15. The battery module according to claim 14, wherein the pouch-shaped secondary batteries are connected in parallel.

## Patentansprüche

1. Beutelförmige Sekundärbatterie, umfassend:
eine Elektrodenanordnung (100), welche eine Elektrodenleitung (110) aufweist, welche davon hervorragt; und
ein Gehäuse (200), welches einen Aufnahmeabschnitt (210) umfasst, welcher dazu eingerichtet ist, die Elektrodenanordnung (100) aufzunehmen, wobei die Elektrodenleitungen (110) aus dem Gehäuse (200) freigelegt sind;
**dadurch gekennzeichnet, dass** die beutelförmige Sekundärbatterie ferner umfasst:
eine Gefahrerfassungsvorrichtung (300), welche eine Gastasche (310), welche an der Elektrodenleitung (110) angeordnet ist, und einen Stromerfassungsabschnitt (320) umfasst, welcher dazu eingerichtet ist, sich in Reaktion auf eine Ausdehnung der Gastasche (310) zu bewegen,
wobei der Stromerfassungsabschnitt (320) umfasst:
einen Elektrodenleitung-Kontaktabschnitt (321), welcher in Kontakt mit der Elektrodenleitung (110) ist; und
einen Gastasche-Kontaktabschnitt (322), welcher an der Gastasche (310) anliegt, wobei der Gastasche-Kontaktabschnitt (322) dazu eingerichtet ist, den Stromerfassungsabschnitt (320) unter Verwendung einer Ausdehnungskraft der Gastasche (310) zu bewegen.

2. Beutelförmige Sekundärbatterie nach Anspruch 1, wobei sich ein Abstand zwischen dem Elektrodenleitung-Kontaktabschnitt (321) und der Elektrodenleitung (110) aufgrund der Expansion der Gastasche (310) erhöht.

3. Beutelförmige Sekundärbatterie nach Anspruch 1, wobei der Gastasche-Kontaktabschnitt (322) die Gastasche (310) entlang einer Richtung kontaktiert, in welche sich die Gastasche (310) ausdehnt.

4. Beutelförmige Sekundärbatterie nach Anspruch 3, wobei der Gastasche-Kontaktabschnitt (322) eine größere Querschnittsbreite als der Elektrodenleitung-Kontaktabschnitt (321) aufweist.

5. Beutelförmige Sekundärbatterie nach Anspruch 1, wobei wenigstens der Elektrodenleitung-Kontaktabschnitt (321) des Stromerfassungsabschnitts (320) ein Leiter ist.

6. Beutelförmige Sekundärbatterie nach Anspruch 5, wobei wenigstens eine äußere Fläche des Gastasche-Kontaktabschnitts (322) des Stromerfassungsabschnitts aus einem isolierenden Material hergestellt ist.

7. Beutelförmige Sekundärbatterie nach Anspruch 6, wobei das isolierende Material ein Material ist, welches eine haftende Kraft aufweist.

8. Beutelförmige Sekundärbatterie nach Anspruch 1, wobei eine Seite des Stromerfassungsabschnitts (320) mit einer Spannungserfassungsvorrichtung verbunden ist.

9. Beutelförmige Sekundärbatterie nach Anspruch 1, wobei ein Abschnitt, an welchem die Gastasche (310) und der Aufnahmeabschnitt (210) miteinander verbunden sind, mit einer geringeren abdichtenden Kraft abgedichtet ist als der abgedichtete Abschnitt (220).

10. Beutelförmige Sekundärbatterie nach Anspruch 9, wobei sich die Gastasche (310) ausdehnt, wenn ein Druck in dem Aufnahmeabschnitt (210) größer oder gleich einem vorbestimmten Bereich ist.

11. Beutelförmige Sekundärbatterie nach Anspruch 1, wobei eine Fläche der Gastasche (310) die Elektrodenleitung (110) kontaktiert, und
wobei die andere Fläche der Gastasche (310) den Stromerfassungsabschnitt (320) kontaktiert.

12. Beutelförmige Sekundärbatterie nach Anspruch 1, wobei die Gastasche (310) an jeder von entgegengesetzten Seiten des Stromerfassungsabschnitts (320) bereitgestellt ist.

13. Beutelförmige Sekundärbatterie nach Anspruch 1, wobei die Gastasche (310) über einem terrassenförmigen Abschnitt bereitgestellt ist, welcher durch einen abgedichteten Abschnitt (220) ausgebildet ist, an welchem die Elektrodenleitung (110) hervorragt, oder wenigstens an der Elektrodenleitung (110) angeordnet ist.

14. Batteriemodul, umfassend die beutelförmige Sekundärbatterie nach einem der Ansprüche 1 bis 13.

15. Batteriemodul nach Anspruch 14, wobei die beutelförmigen Sekundärbatterien parallel geschaltet sind.

## Revendications

1. Batterie secondaire en forme de poche comprenant :
un ensemble d'électrodes (100) ayant un fil d'électrode (110) dépassant de celui-ci ; et
un boîtier (200) comprenant une partie réceptrice (210) configurée pour recevoir l'ensemble d'électrodes (100), dans laquelle les fils d'électrode (110) sont visibles à l'extérieur du boîtier (200) ;
**caractérisée en ce que** la batterie secondaire en forme de poche comprend en outre :
un dispositif de détection de danger (300) comprenant une poche de gaz (310) disposée sur le fil d'électrode (110) et une partie de détection de courant (320) configurée pour se déplacer en réponse à une dilatation de la poche de gaz (310),
dans laquelle la partie de détection de courant (320) comprend :
une partie de contact de fil d'électrode (321) en contact avec le fil d'électrode (110) ; et
une partie de contact de poche de gaz (322) en butée contre la poche de gaz (310), la partie de contact de poche de gaz (322) étant configurée pour déplacer la partie de détection de courant (320) en utilisant une force de dilatation de la poche de gaz (310).

2. Batterie secondaire en forme de poche selon la revendication 1, dans laquelle une distance entre la partie de contact de fil d'électrode (321) et le fil d'électrode (110) augmente en raison de la dilatation de la poche de gaz (310).

3. Batterie secondaire en forme de poche selon la revendication 1, dans laquelle la partie de contact de poche de gaz (322) est en contact avec la poche de gaz (310) le long d'une direction dans laquelle la poche de gaz (310) se dilate.

4. Batterie secondaire en forme de poche selon la revendication 3, dans laquelle la partie de contact de poche de gaz (322) a une largeur de section plus grande que la partie de contact de fil d'électrode (321).

5. Batterie secondaire en forme de poche selon la revendication 1, dans laquelle au moins la partie de contact de fil d'électrode (321) de la partie de détection de courant (320) est un conducteur.

6. Batterie secondaire en forme de poche selon la revendication 5, dans laquelle au moins une surface extérieure de la partie de contact de poche de gaz (322) de la partie de détection de courant est faite d'un matériau d'isolation.

7. Batterie secondaire en forme de poche selon la revendication 6, dans laquelle le matériau d'isolation est un matériau qui a une force adhésive.

8. Batterie secondaire en forme de poche selon la revendication 1, dans laquelle un côté de la partie de détection de courant (320) est relié à un dispositif de mesure de tension.

9. Batterie secondaire en forme de poche selon la revendication 1, dans laquelle une partie au niveau de laquelle la poche de gaz (310) et la partie réceptrice (210) sont reliées l'une à l'autre est scellée avec une force de scellement plus faible que la partie scellée (220).

10. Batterie secondaire en forme de poche selon la revendication 9, dans laquelle la poche de gaz (310) se dilate lorsque la pression dans la partie réceptrice (210) est égale ou supérieure à une plage prédéterminée.

11. Batterie secondaire en forme de poche selon la revendication 1, dans laquelle une surface de la poche de gaz (310) est en contact avec le fil d'électrode (110), et
dans laquelle l'autre surface de la poche de gaz (310) est en contact avec la partie de détection de courant (320).

12. Batterie secondaire en forme de poche selon la revendication 1, dans laquelle la poche de gaz (310) est fournie au niveau de chacun de côtés opposés de la partie de détection de courant (320).

13. Batterie secondaire en forme de poche selon la revendication 1, dans laquelle la poche de gaz (310) est fournie au-dessus d'une partie étagée formée par une partie scellée (220) où le fil d'électrode (110) dépasse ou est disposé au moins sur le fil d'électrode (110).

14. Module de batterie comprenant la batterie secondaire en forme de poche selon l'une quelconque des revendications 1 à 13.

15. Module de batterie selon la revendication 14, dans lequel les batteries secondaires en forme de poche sont connectées en parallèle.
